# EUROPÄISCHE PATENTSCHRIFT

(11) **EP 0 576 513 B1**
(45) Veröffentlichungstag und Bekanntmachung des Hinweises auf die Patenterteilung: **25.10.1995**
(21) Anmeldenummer: 92906879.9
(22) Anmeldetag: 19.03.1992
(51) Int. Cl.: B23K 11/31, B25J 19/00

(54) **MEHRACHSIGER MANIPULATOR**
MULTIAXIS MANIPULATOR
MANIPULATEUR MULTIAXE

(30) Priorität: 21.03.1991 DE 9103497 U
(43) Veröffentlichungstag der Anmeldung: 05.01.1994
(73) Patentinhaber: KUKA Schweissanlagen & Roboter GmbH, D-86165 Augsburg (DE)
(72) Erfinder: ZIMMER, Ernst, D-8904 Friedberg (DE)
(74) Vertreter: Ernicke, Hans-Dieter, Dipl.-Ing.
(86) Internationale Anmeldenummer: EP9200605
(87) Internationale Veröffentlichungsnummer: WO9216332

(56) Entgegenhaltungen:
- EP-A- 0 299 083
- DE-U- 8 703 229
- US-A- 4 855 560
- US-A- 5 025 126
- PATENT ABSTRACTS OF JAPAN vol. 8, no. 249 (M-338)(1686) 15. November 1984 & JP-A-59 125 282 (NISSAN JIDOSHA K.K.) 19 Juli 1984

## Beschreibung

Die Erfindung betrifft einen mehrachsigen Manipulator, insbesondere einen Industrieroboter, mit von außen zugeführten Versorgungsleitungen für das Werkzeug und die Manipulatorantriebe, wobei die Versorgungsleitungen entlang der bewegten Manipulatorglieder verlegt sind.

Ein solcher Manipulator ist aus der US-C-4 855 560 bekannt. Die Versorgungsleitungen für das Werkzeug sind in einem Bündel innen durch den Sockel zum bewegten Karussell geführt. Von dort ist das Bündel weiter im Innenraum durch die Schwinge verlegt. Die Versorgungsleitungen müssen dadurch mittels eines aufwendigen Drehanschlusses über die horizontale Schwenkachse der besagten Schwinge hinweggeführt werden. Sie treten erst am oberen Ende der Schwinge zum Ausleger hin aus. Diese verdeckte Leitungsführung ist beabsichtigt, um die Unfall- und Kollisionsgefahr für die Leitungen zu verringern und um die Leitungen im Inneren des Roboters zu verlegen, bevor der Roboter an seinem Einsatzort aufgestellt und montiert wird. Der vorbekannte Roboter soll mit seinen Leitungen möglichst komplett vormontiert werden. Über die Führung der Versorgungsleitungen für die Manipulatorantriebe ist in der Entgegenhaltung nichts offenbart.

Aus der EP-A-0 299 083 ist ein Roboter bekannt, bei dem die Versorgungsleitungen intern durch den Sockel geführt und mit stationären Anschlußplatten am Sockel verbunden sind. Die Leitungen treten dann am Sockel durch eine Ausnehmung im Mantel wieder nach außen und werden über ein mitdrehendes Schutzblech zum Karussell geführt.

Ein mehrachsiger Manipulator ist auch aus der DE-A-32 37 184 bekannt. Hier werden die Versorgungsleitungen für das Werkzeug von einem externen Speisepunkt auf den Ausleger und von dort zum Werkzeug geführt. Für das Leitungsbündel sind dreh- und schwenkbare Halterungen vorgesehen. Diese Leitungsführung hat den Nachteil, daß die Versorgungsleitungen hohen mechanischen Belastungen ausgesetzt sind. Besonders die Übergabestelle von der ortsfesten Einspeisung zum bewegten Ausleger des Manipulators ist gefährdet. Dieser Leitungsabschnitt muß mehrachsigen Bewegungen im Raum folgen und wird dementsprechend in unterschiedlichen Richtungen verbogen. Nachteilig ist auch die durch die Leitungsführung begrenzte Beweglichkeit des Manipulators.

Aus der DE-A-34 34 899 ist ein weiterer Manipulator bekannt, bei dem die Versorgungsleitungen für das Werkzeug von einem ortsfesten Speisepunkt auf das um die erste Hauptachse drehbare Karussell geführt sind. Von hier aus gehen die Versorgungsleitungen weiter entlang der Manipulatorteile, wie Schwinge, Ausleger und Hand, zum Werkzeug. Bei dieser Leitungsführung sind die mechanischen Belastungen bereits verringert. Die Beweglichkeit des Manipulators ist allerdings immer noch beschränkt. Außerdem ist in beiden Fällen beim Stand der Technik die Leitungsführung nicht optimal in das Manipulatorkonzept integriert.

Die Erfindung hat zur Aufgabe, einen Manipulator mit einer Leitungsführung aufzuzeigen, die besser integriert ist und eine höhere Beweglichkeit gestattet.

Die Erfindung löst diese Aufgabe mit den Merkmalen im Hauptanspruch.
Beim erfindungsgemäßen Manipulator werden die Versorgungsleitung für Werkzeug und Manipulatorantriebe in getrennten Leitungsbündeln geführt und separat angeschlossen, verlaufen aber weitgehend parallel zueinander. Dies ermöglicht eine umfassende Leitungsintegration in das Manipulatorkonzept und trotzdem einen schnellen Austausch und eine Nachrüstung der Versorgungsleitungen für das Werkzeug. Der Manipulator kann auch zunächst ohne Versorgungsleitungen für das Werkzeug ausgeliefert werden. Letztere können auf Wunsch und in geeigneter Ausführung nachträglich angeschlossen und verlegt werden. Hierbei ist die optionale Verlegung dieser Versorgungsleitungen aber von vornherein vorgesehen und vorbereitet.

Die Versorgungsleitungen werden in mehrere Leitungsabschnitte unterteilt, wobei sie in jedem Leitungsabschnitt definierten Belastungen ausgesetzt sind und allenfalls Drehungen um eine einzelne Achse folgen müssen. Durch den Leitungsanschluß am Sockel, der gegenüber der Einspeisestelle relativ ortsfest ist, ergibt sich eine stationäre gering belastete Zuleitung zum Manipulator. Die Versorgungsleitungen werden am Manipulator dann in einem internen Leitungsabschnitt im Sockel verlegt, was vorzugsweise in einer biegsamen Schleife geschieht, die den vorgesehenen Drehbewegungen des Karussells um die erste, meist vertikale Hauptachse problemlos folgen kann. Durch die interne Verlegung ist dieser Leitungsabschnitt kürzer und beweglicher als eine externe Zuleitung auf das Karussell, wodurch die Behinderungen für den Manipulator und die Leitungsbelastungen verringert werden.

Am Karussell werden zumindest die Versorgungsleitungen für das Werkzeug wieder aus dem Manipulatorinnenraum herausgeführt und dann extern entlang der Manipulatorteile, z.B. Schwinge, Ausleger und Hand, zum Werkzeug verlegt. Dies ist einerseits belastungsgünstig mit Hinblick auf die hier meist horizontal verlaufenden Haupt- oder Schwenkachsen des Manipulators. Andererseits sind die Versorgungsleitungen nun wieder von außen frei zugänglich.

Die Erfindung hat den weiteren Vorteil, daß die Versorgungsleitungen standardisiert werden können. Die Leitungsabschnitte lassen sich dabei einzeln austesten und optimieren. Es ergibt sich ein modulares Leitungskonzept, das für alle Anwendungsbereiche des Manipulators und alle Werkzeuge geeignet ist.
Beim Stand der Technik mußte die Leitungsführung zum Werkzeug nach jedem Werkzeugwechsel und Leitungsaustausch neu auf Belastungen und Betriebssicherheit überprüft und ausgetestet werden. Dies erforderte einen erheblichen Aufwand, der mit jedem Werkzeug erneut getrieben werden mußte. Mit dem modularen Leitungskonzept ist dies nicht mehr erforderlich.

Standardisiert sind auch die Schnittstellen der einzelnen Leitungsabschnitte in Form von modular aufgebauten Anschlußplatten mit vorbereiteten und definierten Anschlußfeldern. Die Anschlußplatten bieten zum einen den Vorteil fester Verbindungsstellen der Leitungsenden. Zum anderen sind die verschiedenen Versorgungsleitungen des Werkzeugs für elektrische, hydraulische oder pneumatische Energieversorgung, Meß- und Steuersignale, Kühlmittel etc. mit speziellen Kupplungen ausgerüstet, die als Einsätze für die Anschlußplatten ausgebildet sind. Die verschiedenen Kupplungseinsätze sind in Größe und Form an die Anschlußfelder adaptiert und lassen sich so bei einem Werkzeug- und Leitungstausch leicht, schnell und paßgenau gegeneinander wechseln. Nicht benötigte Anschlußfelder können durch eine Blende abgedeckt sein.

Vorteilhaft ist ferner die Möglichkeit, einzelne Leitungsabschnitte und auch einzelne Leitungsstränge selektiv auszutauschen oder nachzurüsten. Ersteres ist für Reparatur- und Wartungsarbeiten günstig. Die Nachrüstmöglichkeit erlaubt Ergänzungen oder Umbauten am Werkzeug.

Die Versorgungsleitungen können an ein Einzelwerkzeug speziell angepaßt sein und werden mit diesem gewechselt. Es ist aber auch möglich, an der Hand des Manipulators eine Wechselkupplung für unterschiedliche Werkzeuge anzuordnen und die Versorgungsleitungen als Sammelleitungen für alle erforderlichen Betriebsmittel auszubilden. Durch geeignete Leitungskupplungen werden von den Werkzeugen dann nur die benötigten Leitungen geöffnet, während die anderen geschlossen bleiben. Daneben gibt es noch weitere Variationsmöglichkeiten für die Leitungskonzepte.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen
- Figur 1:: einen mehrachsigen Manipulator mit Versorgungsleitungen für das Werkzeug in Seitenansicht,
- Figur 2:: eine Stirnansicht des Manipulators entsprechend Pfeil I von Figur 1 und
- Figur 3:: eine Detailansicht einer Klemmenanordnung für Versorgungleitungen und einen Schutzschlauch.

In den Zeichnungen ist ein mehrachsiger Manipulator (1) in Form eines Industrieroboters dargestellt, der einen Sockel (2) mit einem darauf um eine vertikale Achse drehbaren Karussell (3) aufweist. Am Karussell (3) ist eine Schwinge (4) um eine horizontale Schwenkachse (23) drehbar gelagert. Die Schwinge (4) ist einarmig ausgebildet und ist asymmetrisch zur Mittelachse bzw. der Karusselldrehachse angeordnet. Am oberen Ende der Schwinge (4) ist über ein Schwenklager (27) ein Ausleger (5) einseitig gelagert, der um eine ebenfalls horizontale Schwenkachse (23) drehen kann. Der Ausleger (5) trägt am Ende eine mehrachsige Hand (6) des Manipulators, an der wiederum ein Werkzeug (7), hier in Form einer Punktschweißzange, befestigt ist. Für die Bewegungen der einzelnen Manipulatorteile sind Antriebe (8) vorgesehen. Die drei für eine Zentralhand (6) benötigten Antriebe (8) sind am Ende des Auslegers (5) in einer Dreiecksanordnung dichtgepackt angeordnet.

Für die Antriebe (8) des Manipulators (1) sind mehrere Versorgungsleitungen (9) vorgesehen. Es handelt sich hierbei um Stromkabel für die elektrische Energieversorgung der Motoren, um Stromkabel für Meß- und Steuersignale etc.

Hierdurch werden auch Weg- und Drehgeber, Belastungssensoren und dergleichen andere Teile der Manipulatoren versorgt. Es können auch Schmier- oder Kühlmittel zu einzelnen Baugruppen des Manipulators (1) transportiert werden.

Desweiteren sind hiervon getrennte Versorgungsleitungen (10) für das Werkzeug (7) vorgesehen. Je nach Art und Ausbildung des Werkzeugs können dies Stromkabel, Druckluftschläuche, Kühlmittelleitungen, Hydraulikschläuche und dergleichen andere Leitungen für die vom Werkzeug (7) benötigten Betriebs- und Hilfsmittel sein.

Die Versorgungsleitungen (9,10) sind getrennt voneinander geführt und jeweils in Leitungsbündeln zusammengefaßt. Sie werden von einer nicht dargestellten Speisestelle zum Sockel (2) des Manipulators (1) geführt und dort nebeneinander an einer Anschlußplatte (11) in der Sockelwand angeschlossen. Der Sockel (2) ist zur Speisestelle relativ ortsfest, so daß sich eine stationäre Zuleitung in diesen Bereich ergibt. Vorzugsweise ist der Sockel (2) am Boden oder an einer Wand befestigt, kann aber auch auf einem Schlitten, einem Portal oder dergleichen angeordnet sein.

Im weiteren Verlauf in und entlang des Manipulators (1) sind die Versorgungsleitungen (9,10) in Abschnitte aufgeteilt, nämlich einen internen Leitungsabschnitt (12,13), der im inneren des Sockels (2) bis zum drehbaren Karussell (3) verlegt ist und dort wieder nach außen tritt und sich in einem anschließenden externen Leitungsabschnitt (14,15) fortsetzt. Der externe Leitungsabschnitt (15) ist dabei entlang der Schwinge (4), des Auslegers (5) und der Hand (6) zum Werkzeug (7) verlegt, während der im wesentlichen hierzu parallel geführte externe Leitungsabschnitt (14) entlang der Schwinge (4) zu den Antrieben (8) am Ende des Auslegers (5) geführt ist.

Im Sockel (2) sind der interne Leitungsabschnitt (12) für die Manipulatorantriebe (8) bzw. andere Teile oder Baugruppen des Manipulators und der internen Leitungsabschnitte (13) für das Werkzeug (7) jeweils in einer U-förmigen Schleife verlegt. Die beiden Schleifen liegen einander um die Drehachse des Karussells (3) gegenüber und rollen bei einer relativen Drehbewegung des Karussells (3) gegenüber dem Sockel (2) ab.

Der zum Werkzeug (7) führende interne Leitungsabschnitt (13) mündet am Karussell (3) in einer weiteren Anschlußplatte (16) und tritt hier wieder nach außen. Der externe Leitungsabschnitt (15) ist ebenfalls an der Anschlußplatte (16) angeschlossen.

Der für die Manipulatorversorgung vorgesehene interne Leitungsabschnitt (12) kann sich im Sockel (2) und am Übergang im Karussell (3) in mehrere Einzelstränge aufteilen. Ein Teil hiervon ist zu den unten liegenden Antrieben (8) für die Schwinge (4) und das Karussell (3) sowie eventuell weiteren Verbrauchern geführt. Der andere Teil tritt an oder neben der Anschlußplatte (16) aus dem Innenraum des Karussells (3) nach außen. Dieser externe Leitungsabschnitt (14) ist an der den Handantrieben (8) abgewandten Rückseite der Schwinge (4) entlanggeführt und zumindest bereichsweise von einem Gehäuse (25) umgeben. Am oberen Schwingenende treten die Versorgungsleitungen (9) mittels einer Brücke (24) über das Schwenklager (27) zum Ausleger (5) bzw. den Antrieben (8). Die Brücke (24) ist mit dem Ausleger (5) verbunden und dreht mit diesem um die Schwenkachse (23). Der externe Leitungsabschnitt (13) folgt hierdurch den Auslegerbewegungen.

Die Versorgungsleitungen (9) für die Antriebe (8) bzw. für andere Teile und Baugruppen des Manipulators (1) sind betriebsnotwendig und immer vorhanden. Die Versorgungsleitungen (10) für das Werkzeug (7) sind hingegen optional und hängen von der Art und der Ausbildung des Werkzeugs (7) ab. Sie sind den Werkzeuganforderungen angepaßt, was große Unterschiede in der Art und Anzahl der einzelnen Leitungen und demgemäß auch im kostenmäßigen Aufwand mit sich bringen kann. Deshalb ist die Leitungsführung so ausgelegt, daß die Versorgungsleitungen (10) zum Werkzeug (7) auch an einem fertigen und kostengünstigen Standard- oder Serienmanipulator ohne umfangreiche Demontage bzw. Montagearbeiten angebracht und nachgerüstet werden können.

Zu diesem Zweck sind die Anschlußplatten (11,16) modular aufgebaut und weisen standardisierte Anschlußfelder (17) für unterschiedliche Leitungsarten auf. Die Anschlußplatten (11,16) können in verschiedene Anschlußfelder (17) aufgeteilt sein. Die manipulatoreigenen Versorgungsleitungen (9) sind im externen Leitungsabschnitt (14) vorzugsweise getrennt und über einen eigenen Anschluß am Karussell (3) geführt. Alternativ können aber auch an der Anschlußplatte (16) Anschlußmöglichkeiten hierfür vorgesehen sein.

Die Anschlußplatten (11,16) bilden die Schnittstellen für die stationäre Zuleitung und die internen und externen Leitungsabschnitte (12,13,15). Die Anschlußplatten (11,16) sind in der Wandung des Sockels (2) bzw. des Karussells (3) montiert und bieten feste Verbindungsstellen für die Leitungsabschnitte. Die Leitungsenden sind hierzu mit Kupplungen ausgerüstet, die an die jeweilige Leitungsart angepaßt sind. Die Kupplungen sind als Einsätze ausgebildet, die untereinander eine gleiche Form haben und in den standardisierten Anschlußfeldern (17) Platz finden. Die Kupplungseinsätze der unterschiedlichen Leitungen lassen sich so problemlos gegeneinander wechseln und austauschen. Die Anschlußfelder (17) haben dabei vorbereitete Fassungen mit Befestigungsmitteln für diese Kupplungseinsätze. Es sind so viele Fassungen in den Anschlußfeldern (17) vorhanden, wie für eine maximale Werkzeugversorgung sowie für eine maximale Art und Zahl der Versorgungsleitung (10) benötigt werden. Nicht erforderliche Fassungen sind ohne Belegung und werden mit einer Blende abgedeckt. Es können auch Anschlußfelder (17) oder Fassungen auf Vorrat für eventuelle zukünftige Werkzeugausbauten vorgesehen sein.

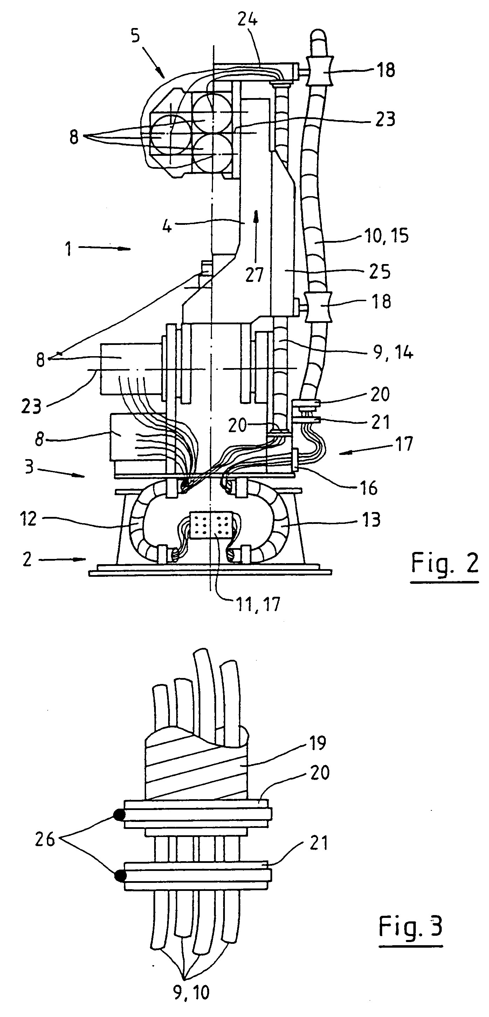

Die Versorgungsleitungen (9,10) sind im Bereich der Schleifen innerhalb des Sockels (2) und in den externen Leitungsabschnitten (14,15) jeweils gebündelt geführt und von einem Schutzschlauch (19) umgeben. Im Sockel (2) sind die Schutzschläuche (19) über Halterungen am einen Ende an der Bodenplatte des Sockels (2) und am anderen Ende an der Bodenplatte des Karussells (3) befestigt. Die Leitungen werden so im Bündel zusammengehalten und bei den Drehbewegungen des Karussells (3) geführt. Das Karussellager ist als Kranz mit relativ großem Durchmesser ausgebildet, durch dessen Innenraum die Versorgungsleitungen (9,10) in das Gehäuse des Karussells (3) übertreten. Sie sind hier vorzugsweise als offene Bündel geführt. Die zum Werkzeug (7) führenden Versorgungsleitungen (10) sind an den Enden des externen Abschnitts (15) jeweils durch eine Klemmenanordnung (20,21) gehalten. Wie Figur 3 verdeutlicht, hält die eine Klemme (20) den Schutzschlauch (19), während die mit etwas Abstand jeweils davor angeordnete Klemme (21) die Versorgungsleitungen (10) hält. Sie ist hierzu mit einem Separiereinsatz versehen, wie er beispielsweise aus der DE-OS 34 34 899 bekannt ist. Die einzelnen Leitungsstränge werden in vorbereitete Öffnungen dieses scheibenförmigen Einsatzes eingeclipst und der Einsatz dann in der Klemme (21) formschlüssig geführt. Beide Klemmen (20,21) verfügen über Schnellverschlüsse (26).

Am oberen Ende sind die Klemmen (20,21) am Werkzeug (7) getrennt voneinander befestigt. Dies sorgt für eine Zugentlastung der Versorgungsleitungen (10) gegenüber dem Schutzschlauch (19). Am unteren Ende sind die Klemmen (20,21) an einem Flansch befestigt, der sich von der Anschlußplatte (16) aus ein Stück nach oben erstreckt. Die nach den Klemmen (20,21) freigelegten Versorgungsleitungen (10) werden dann in einer weichen Biegung zu ihren Kupplungseinsätzen in der Anschlußplatte (16) geführt.

Im externen Leitungsabschnitt (15) sind die Versorgungsleitungen (10) bzw. der sie umgebende Schutzschlauch (19) in mehreren Leitungshalterungen (18) gefaßt und geführt. Die Leitungshalterungen (18) besitzen ein Gehäuse, das sich beidseits trompetenförmig erweitert und sind drehbar und/oder schwenkbar gelagert. An der Schwinge (4) sind zwei Leitungshalterungen (18) jeweils im Bereich aber mit seitlichem Abstand zu den Schwenkachsen (23) angeordnet. Der Ausleger (5) trägt über einen Federarm eine weitere Leitungshalterung (18). Die Leitungshalterungen weisen ein aufklappbares Gehäuse mit Schnellverschluß auf.

Die Versorgungsleitungen (10) können jeweils an ein spezielles Einzelwerkzeug (7), beispielsweise einen Schweißbrenner, eine Punktschweißzange, eine Sprühpistole, einen Montagekopf oder dergleichen andere Konstruktionen angepaßt sein. Sie enthalten dann nur die hierfür jeweils erforderlichen Leitungsarten. Zu einem Werkzeugwechsel werden die Versorgungsleitungen (10) mitausgetauscht.

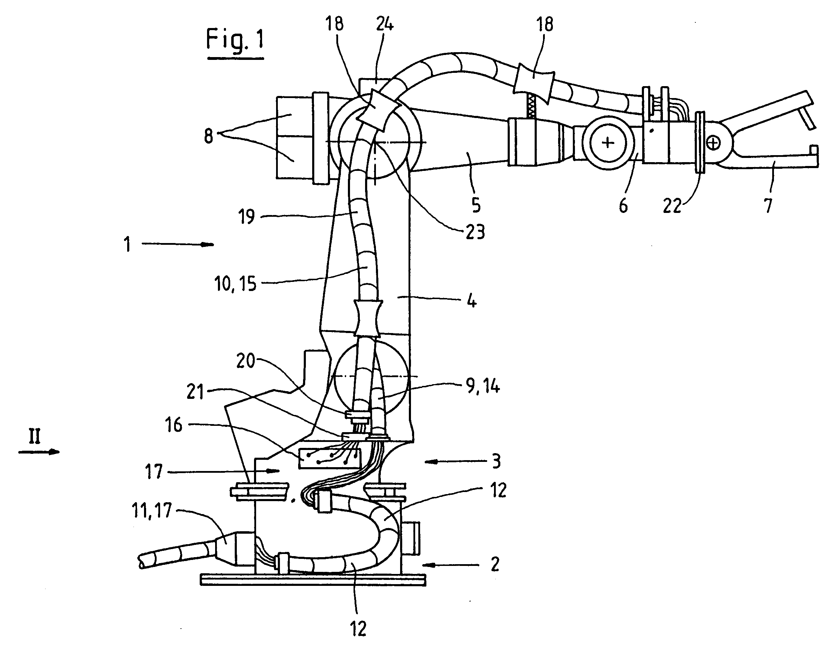

Figur 1 zeigt hierzu eine Alternative. Der Manipulator (1) trägt an der Hand (6) eine Wechselkupplung (22), die es ermöglicht unterschiedliche Arten von Einzelwerkzeugen (7) zu benutzen und auszutauschen. Derartige Wechselkupplungen (22) sind in unterschiedlichen Ausführungsformen bekannt. Die verschiedenen Einzelwerkzeuge (7) benötigen unterschiedliche Versorgungen. Die Versorgungsleitungen (10) sind als Sammelleitung mit Sammel-Kupplungseinsätzen für die verschiedenen Werkzeugtypen ausgebildet und stellt alle benötigten Versorgungen bereit. Die Versorgungsleitungen (10) münden an der Wechselkupplung (22). In diesem Fall sind die Klemmen (20,21) am Schaft der Wechselkupplung (22) angebracht. Die Leitungsenden sind mit Verschlüssen versehen, die bei Bedarf vom angesteckten Einzelwerkzeug (7) geöffnet werden und ansonsten verschlossen bleiben

### STÜCKLISTE

- 1: Manipulator, Industrieroboter
- 2: Sockel, Gestell
- 3: Karussell
- 4: Schwinge
- 5: Ausleger
- 6: Hand
- 7: Werkzeug
- 8: Antrieb
- 9: Versorgungsleitungen, Roboter
- 10: Versorgungsleitungen, Werkzeug
- 11: Anschlußplatte (Werkzeug, Roboter)
- 12: Interner Leitungsabschnitt, Roboter
- 13: Interner Leitungsabschnitt, Werkzeug
- 14: Externer Leitungsabschnitt, Roboter
- 15: Externer Leitungsabschnitt, Werkzeug
- 16: Anschlußplatte, Werkzeug
- 17: Anschlußfeld
- 18: Leitungshalterung
- 19: Schutzschlauch
- 20: Klemme, Schutzschlauch
- 21: Klemme, Versorgungsleitungen
- 22: Wechselkupplung, Werkzeug
- 23: Schwenkachse
- 24: Brücke
- 25: Gehäuse
- 26: Schnellverschluß
- 27: Schwenklager

## Patentansprüche

1. Mehrachsiger Manipulator, insbesondere Industrieroboter (1), mit von außen zugeführten Versorgungsleitungen (9,10) für das Werkzeug (7) und die Manipulatorantriebe (8), die am relativ ortsfesten Sockel (2) des Manipulators (1) angeschlossen sind, wobei zumindest die Versorgungsleitungen (10) für das Werkzeug (7) dann innen durch den Sockel (2) zum bewegten Karussell (3) und dann entlang der bewegten Manipulatorglieder (4,5,6) verlegt sind, dadurch **gekennzeichnet**, daß die Versorgungsleitungen (9,10) für das Werkzeug (7) und die Manipulatorantriebe (8) in getrennten Leitungsbündeln geführt und separat angeschlossen sind, wobei zumindest die Versorgungsleitung (10) für das Werkzeug (7) in zwei Leitungsabschnitte (13,15) unterteilt sind, wobei der durch den Sockel (2) führende interne Leitungsabschnitt (13) am Karussell (3) wieder nach außen tritt und an einer Anschlußplatte (16) am Karussell (3) mündet, an der der externe und dann außen entlang der bewegten Manipulatorteile (4,5,6) zum Werkzeug (7) geführte Leitungsabschnitt (15) über eine lösbare Kupplung angeschlossen ist.

2. Manipulator nach Anspruch 1, dadurch **gekennzeichnet**, daß die Versorgungsleitungen (9) für die Manipulatorantriebe (8) ebenfalls in einem internen Leitungsabschnitt (12) durch den Sockel (2) zum Karussell (3) und von dort in einer Abzweigung nach außen und dann in einem externen Leitungsabschnitt (14) im wesentlichen parallel mit den anderen Versorgungsleitungen (10) zu den oberen Manipulatorantrieben (8) geführt sind.

3. Manipulator nach Anspruch 1 oder 2, dadurch **gekennzeichnet**, daß die internen Leitungsabschnitte (12,13) als biegsame Schleife verlegt sind.

4. Manipulator nach Anspruch 1, 2, oder 3, dadurch **gekennzeichnet**, daß am Sockel (2) eine Anschlußplatte (11) für die Versorgungsleitungen (9,10) angeordnet ist, wobei die Anschlußplatten (11,16) modular aufgebaut sind und standardisierte Anschlußfelder (17) für unterschiedliche Leitungsarten aufweisen.

5. Manipulator nach Anspruch 4, dadurch **gekennzeichnet**, daß in den Anschlußfeldern (17) wechselbare und an die unterschiedlichen Leitungsarten angepaßte Kupplungseinsätze angeordnet sind.

6. Manipulator nach Anspruch 1 oder einem der folgenden, dadurch **gekennzeichnet**, daß der externe Leitungsabschnitt (15) in Leitungshalterungen (18) geführt ist, die verdrehbar und mit Abstand zu den Schwenkachsen (23) des Manipulators (1) angeordnet sind.

7. Manipulator nach Anspruch 1 oder einem der folgenden, dadurch **gekennzeichnet**, daß die Versorgungsleitungen (9,10) zumindest im externen Leitungsabschnitt (14,15) in einem Schutzschlauch (19) angeordnet sind, wobei an den endseitigen Anschlußstellen Klemmen (20) für den Schutzschlauch (19) oder getrennte Klemmen (20,21) für den Schutzlauch (19) und die Versorgungsleitungen (9,10) angeordnet sind.

8. Manipulator nach Anspruch 7, dadurch **gekennzeichnet**, daß die Klemmen (20,21) Schnellverschlüsse (26) und für die Versorgungsleitungen (9,10) einen Führungseinsatz für die Einzelstränge aufweisen.

9. Manipulator nach Anspruch 1 oder einem der folgenden, dadurch **gekennzeichnet**, daß der Manipulator (1) ein Einzelwerkzeug (7) trägt, wobei die Versorgungsleitungen (10) und die Kupplungseinsätze speziell auf dieses Werkzeug adaptiert sind.

10. Manipulator nach Anspruch 1 oder einem der folgenden, dadurch **gekennzeichnet**, daß der Manipulator (1) eine Wechselkupplung (22) für austauschbare unterschiedliche Werkzeuge trägt, wobei die Versorgungsleitungen (10) und die Kupplungseinsätze als Sammelleitungen bzw. Sammeleinsätze für die verschiedenen Werkzeuge ausgebildet sind.

11. Manipulator nach Anspruch 1 oder einem der folgenden, dadurch **gekennzeichnet**, daß die externen Leitungsabschnitte (14,15) längs der Schwinge (4) auf der dem Ausleger (5) abgewandten Schwingenseite verlegt sind und die Versorgungsleitungen (9) für die Manipulatorantriebe (8) in einer mit dem Ausleger (5) verbundenen Brücke (24) über das Schwenklager (27) geführt sind.

12. Manipulator nach Anspruch 1 oder einem der folgenden, dadurch **gekennzeichnet**, daß die Versorgungsleitungen (9) längs der Manipulatorteile zumindest teilweise von einem schützenden Gehäuse (25) umgeben sind.

## Claims

1. A multiaxis manipulator, in particular an industrial robot (1), having supply lines (9, 10) coming from the outside for the tool (7) and the manipulator drives (8), which are attached to the relatively stationary base (2) of the manipulator (1), at least the supply lines (10) for the tool (7) then being laid on the inside through the base (2) to the moving carousel (3) and then being laid along the moving manipulator members (4, 5, 6), characterized in that the supply lines (9, 10) for the tool (7) and the manipulator drives (8) are guided in separated line bundles and are attached separately, at least the supply line (10) for the tool (7) being divided into two line portions (13, 15), the internal line portion (13) leading through the base (2) emerging to the outside again at the carousel (3) and opening at the carousel (3) onto a terminal board (16), to which the line portion (15) which is external and then guided on the outside along the moving manipulator parts (4, 5, 6) to the tool (7) is attached by way of a detachable coupling.

2. A manipulator according to Claim 1, characterized in that the supply lines (9) for the manipulator drives (8) are also guided in an internal line portion (12) through the base (2) to the carousel (3) and from there in a branch to the outside and then in an external line portion (14) substantially parallel to the other supply lines (10) to the upper manipulator drives (8).

3. A manipulator according to Claim 1 or 2, characterized in that the internal line portions (12, 13) are laid in the form of a flexible loop.

4. A manipulator according to Claim 1, 2 or 3, characterized in that a terminal board (11) for the supply lines (9, 10) is arranged on the base (2), the terminal boards (11, 16) being of modular construction and having standardized termination panels (17) for different types of line.

5. A manipulator according to Claim 4, characterized in that exchangeable coupling inserts matched to the different types of line are arranged in the termination panels (17).

6. A manipulator according to Claim 1 or one of the subsequent claims, characterized in that the external line portion (15) is guided in line mountings (18) which are rotatable and arranged at a spacing from the pivot axes (23) of the manipulator (1).

7. A manipulator according to Claim 1 or one of the subsequent claims, characterized in that the supply lines (9, 10) are arranged at least in the external line portion (14, 15) in a protective hose (19), clips (20) for the protective hose (19) or separate clips (20, 21) for the protective hose (19) and the supply lines (9, 10) being arranged at the end terminal points.

8. A manipulator according to Claim 7, characterized in that the clips (20, 21) are quick-release locks (26) and have a guide insert for the individual strands of the supply lines (9, 10).

9. A manipulator according to Claim 1 or one of the subsequent claims, characterized in that the manipulator (1) carries a single tool (7), the supply lines (10) and the coupling inserts being matched specifically to this tool.

10. A manipulator according to Claim 1 or one of the subsequent claims, characterized in that the manipulator (1) carries an exchangeable coupling (22) for different exchangeable tools, the supply lines (10) and the coupling inserts being constructed as collective lines and collective inserts for the different tools.

11. A manipulator according to Claim 1 or one of the subsequent claims, characterized in that the external line portions (14, 15) are laid along the rocker (4) on the side of the rocker remote from the arm (5), and the supply lines (9) for the manipulator drives (8) are guided over the pivot bearing (27) in a bridge (24) connected to the arm (5).

12. A manipulator according to Claim 1 or one of the subsequent claims, characterized in that, along the manipulator parts, the supply lines (9) are surrounded at least partially by a protective housing (25).

## Revendications

1. Manipulateur à plusieurs axes, notamment robot industriel (1), comportant des lignes ou conduites d'alimentation (9,10) arrivant de l'extérieur pour l'outil (7) et les dispositifs d'entraînement (8) du manipulateur, qui sont raccordées au socle (2), fixe de façon relative, du manipulateur (1), au moins les lignes ou conduites d'alimentation (10) de l'outil (7) passant ensuite à l'intérieur du socle (2) jusqu'au carrousel déplacé (3), puis le long des organes déplacés (4,5,6) du manipulateur, caractérisé par le fait que les lignes ou conduites d'alimentation (9,10) de l'outil (7) et des dispositifs d'entraînement (8) du manipulateur sont guidées dans des faisceaux de lignes ou conduites distincts et sont raccordées indépendamment, au moins la ligne ou conduite d'alimentation (10) de l'outil (7) étant subdivisée en deux tronçons de ligne ou conduite (13,15), le tronçon interne de ligne ou conduite (13), qui passe dans le socle (2), ressortant à l'extérieur au niveau du carrousel (3) et débouchant, dans le carrousel, sur une plaque de raccordement (16), à laquelle est raccordé, par l'intermédiaire d'un accouplement amovible, le tronçon externe de ligne ou conduite (15), guidé ensuite extérieurement jusqu'à l'outil (7) le long des parties déplacées (4,5,6) du manipulateur.

2. Manipulateur suivant la revendication 1, caractérisé en ce que les lignes ou conduites d'alimentation (9) des dispositifs d'entraînement (8) du manipulateur passent également, pour un tronçon interne de ligne ou conduite (12), dans le socle (2) jusqu'au carrousel (3) et à partir de là, selon une dérivation, à l'extérieur, puis, suivant un tronçon externe de ligne ou conduite (14), essentiellement parallèlement aux autres lignes ou conduites d'alimentation (10), jusqu'aux dispositifs supérieurs d'entraînement (8) du manipulateur.

3. Manipulateur suivant la revendication 1 ou 2, caractérisé en ce que les tronçons internes de lignes ou conduites (12,13) sont posés sous la forme de boucles flexibles.

4. Manipulateur suivant la revendication 1, 2 ou 3, caractérisé en ce que sur le socle (2) est prévue une plaque de raccordement (11) prévue pour les lignes ou conduites d'alimentation (9,10), les plaques de raccordement (11,16) étant agencées de façon modulaire et comportant des panneaux de raccordement standardisés (17) pour des types différents de lignes ou conduites.

5. Manipulateur suivant la revendication 4, caractérisé en ce que dans les panneaux de raccordement (17) sont disposés des accouplements rapportés interchangeables, qui sont adaptés aux différents types de lignes ou conduites.

6. Manipulateur suivant la revendication 1 ou l'une des suivantes, caractérisé par le fait que le tronçon externe de ligne ou conduite (15) est guidé dans des supports de lignes ou conduites (18), qui sont disposés de manière à pouvoir tourner et à distance des axes de basculement (23) du manipulateur (1).

7. Manipulateur suivant la revendication 1 ou l'une des suivantes, caractérisé par le fait que les lignes ou conduites d'alimentation (9,10) sont disposées, au moins pour ce qui concerne le tronçon externe de lignes ou conduites (14,15), dans un tuyau de protection (19), des pinces (20) pour le tuyau de protection (19) ou des pinces distinctes (20,21) pour le tuyau de protection (19) et les lignes ou conduites d'alimentation (9,10) sont prévues aux points de raccordement du côté de l'extrémité.

8. Manipulateur suivant la revendication 7, caractérisé en ce que les pinces (20,21) comportent des dispositifs de fermeture rapide (26) et, pour les lignes ou conduites d'alimentation (9,10), une pièce rapportée de guidage pour les faisceaux.

9. Manipulateur suivant la revendication 1 ou l'une des suivantes, caractérisé par le fait que le manipulateur (1) porte un outil (7), les lignes ou conduites d'alimentation (10) et les accouplements rapportés étant adaptés spécialement à cet outil.

10. Manipulateur suivant la revendication 1 ou l'une des suivantes, caractérisé par le fait que le manipulateur (1) porte un accouplement changeur (22) pour différents outils interchangeables, les lignes ou conduites d'alimentation (10) et l'accouplement rapporté étant agencés en tant que lignes ou conduites collectives ou pièce rapportée collective pour les différents outils.

11. Manipulateur suivant la revendication 1 ou l'une des suivantes, caractérisé par le fait que les tronçons externes de lignes ou conduites (14,15) sont disposés le long du bras oscillant (4) sur le côté du bras oscillant tourné à l'opposé du bras en console (5) et que les lignes ou conduites d'alimentation (9) des dispositifs d'entraînement (8) du manipulateur sont guidées dans un étrier (24), qui est relié au bras en console (5), au-dessus du palier de basculement (24).

12. Manipulateur suivant la revendication 1 ou l'une des suivantes, caractérisé par le fait que les lignes ou conduites d'alimentation (9) sont entourées, le long des parties du manipulateur, au moins partiellement d'un boîtier de protection (25).
